# EUROPEAN PATENT SPECIFICATION

(11) **EP 1 148 788 B1**
(45) Date of publication and mention of the grant of the patent: **28.08.2002**
(21) Application number: 99957969.1
(22) Date of filing: 07.12.1999
(51) Int. Cl.: A22C 21/06

(54) **METHOD AND APPARATUS FOR SEPARATING INTESTINE PACKS FROM SLAUGHTERED POULTRY, PARTICULARLY BROILERS**
VERFAHREN UND VORRICHTUNG ZUR TRENNUNG DES EINGEWEIDE VON SCHLACHTGEFLÜGEL INSBESONDERE BRATHÜHNER
PROCEDE ET APPAREIL POUR SEPARER LES MASSES DES VISCERES DE VOLAILLES D'ABATTAGE, EN PARTICULIER DES POULETS A GRILLER

(30) Priority: 07.12.1998 DK 161798
(43) Date of publication of application: 31.10.2001
(73) Proprietor: LINDHOLST & CO. A/S, 8380 Trige (DK)
(72) Inventor: ANDERSEN, Claus, DK-8370 Hadsten (DK); ANDERSEN, Torben, DK-8500 Grena (DK)
(74) Representative: Gregersen, Niels Henrik
(86) International application number: DK9900685
(87) International publication number: WO00033661

(56) References cited:
- EP-A2- 0 587 253
- GB-A- 2 004 175
- US-A- 5 152 715
- US-A- 5 186 678
- US-A- 5 318 428

## Description

The present invention concerns a method for separating intestine packs from slaughtered poultry, in particular broilers, and of the kind indicated in the preamble of claim 1.

EP-A2-0 587 253 describes a method and a device for separation of one or more internal organs or a part thereof from a cluster of interconnected internal organs from a slaughtered animal, in particular a slaughtered bird, making use of a fixing device which is moved through an evisceration opening into the body of the bird. A part of the cluster is fixed with the aid of and relative to the fixing device, the connection between the organs and the body is broken, and the organs are taken out of the body. The fixing is maintained after the organs have been taken out of the body and until a separating operation have been carried out on one or more organs or a part thereof in a spatial orientating determined by the fixing. The fixing is achieved by clamping a part of the cluster. During the fixing, organs can be separated from the cluster of organs with the aid of guide elements, stripping elements, separating rollers, and cutting elements.

The invention has the purpose of providing an improved method for separating intestine packs from slaughtered poultry, particularly broilers, and which enables both automating separation of certain organs from the intestine packs and also to reduce the risk of cross-contamination between intestine packs from respective broilers.

The method according to the invention is characterised in that lower parts of the intestine packs are clamped between clip brackets rotating about a reversing wheel, that certain organs of the intestine packs with still arbitrary orientation via upwardly inclined parts of mainly horizontal guide plates arranged along the periphery of a reversing wheel are inserted between the guide plates in such a way that said certain organs, i.e. proventriculus, gizzard, heart/lungs and liver, are disposed over the guide plates, and that said lower parts of the intestine packs with gall bladders is disposed at the underside of the guide plates, so that said lower parts of the intestine packs are displaced downward in relation to said certain organs of the intestine packs, while said intestine packs are passing a stationary, rotating knife for cutting free said lower parts of the intestine pack including the gall bladder from the liver, and that the remaining intestine packs, i.e. proventriculus, gizzards, heart/lungs and liver, are released and passed on to a second apparatus for further separation.

By means of simple mechanical measures there is hereby achieved a considerably improved method which enables automating separation of certain intestine parts with arbitrary orientation of the intestine packs and also to reduce the risk of cross-contamination between intestine packs from respective broilers.

It is considered particularly important that a downward directed pull is exerted on the intestine pack so that the gall bladder is pulled downward in relation to the liver so that it is ensured that the connection between the gall bladder and the liver may be cut free of the liver very close to it by means of said stationary rotating cutter disposed along the underside of the guide plates, so that heart/lung and liver together are not contaminated with gall.

The method according to the invention may suitably comprise following method steps, that the hard solid part of the remaining intestine pack, the gizzard, is caught hold of and fixed in a guide groove preferably having V-shaped cross section and being open downwards, so that the intestine pack is hanging down from the guide groove, and that the intestine pack e.g. by means of a carrier-provided conveyor is inserted between preferably mutually parallel, mainly horizontal guide rods spaced apart from the guide groove in such a way that heart/lungs are disposed at the underside of the guide rods, that these are successively twisted to mutual vertical position and continue in straight, mainly vertical guide plates so that heart/lungs are disposed at one side of the guide plates, and that the heart/lungs are cut free from the remaining intestine pack by passing a stationary, rotating cutter placed along the opposite side of the guide plates after which the remaining part of the intestine pack is inserted between straight, mainly horizontal guide plates that are disposed immediately under the V-shaped guide groove, which guide plates are continued in a downward curved path so that the liver is scraped off from the remaining intestine pack, namely gizzard, proventriculus, spleen, crop and gullet, which is then passed out of the guide groove and passed further on, e.g. to a gizzard separating apparatus.

The invention also concerns an apparatus for performing the method according to the invention, the apparatus being characterised in that it comprises mainly horizontal-guide plates arranged along the periphery of the reversing wheel, the guide plates comprising upwardly inclined parts for successively receiving and guiding said intestine packs in such a way that certain organs of the intestine packs, i.e. proventriculus, gizzard, heart/lungs and liver are disposed over the guide plates, and that the intestine pack with gall bladder is disposed at the underside of the guide plates, clip brackets being arranged to rotate about the reversing wheel with the same mutual distance as that of the intestine packs, said clip brackets being arranged to grip and clamp lower parts of the intestine pack and to exert a downward directed pull in said lower parts of the intestine pack, a stationary rotatable cutter along the underside of the guide plates for cutting free the lower part of the intestine pack with gall bladder from the liver.

A further apparatus according to the invention is furthermore preferably designed so that it comprises a guide groove which is open downwards and preferably has V-shape, which guide groove is arranged to catch and fix the hard, solid part of the remaining intestine pack, the gizzard which is advanced with mutual spacing in the guide groove by means of a carrier-provided conveyor, preferably round, mutual parallel, mainly horizontal guide rods spaced apart from the guide groove for fixing the heart/lungs, the guide rods being successively mutually twisted to a mainly vertical position and continued in straight, mainly vertical guide plates, a stationary rotatable cutter along the opposite side of the guide plates for cutting free the heart/lungs from the remaining intestine pack, and straight, mainly horizontal guide plates disposed immediately under the V-shaped guide groove and continuing in a downward curved path for scraping off the liver from the remaining intestine pack, namely gizzard, proventriculus, spleen, crop and gullet, which is then released and passed further on to e.g. a gizzard separating apparatus.

The invention is explained more closely in the following in connection with the drawing, on which:
- Fig. 1: shows in principle a sketch for illustrating an embodiment for an apparatus for use in an introductory method step of the method for separating intestine packs according to the invention,
- Fig. 2: shows a corresponding sketch of the embodiment shown in Fig. 1 in principle for an apparatus - shown from another side,
- Fig. 3.: shows a side view - partly in section - of an embodiment for an apparatus constructed in connection with a reversing wheel for use in the method step according to the invention, cf. Figs. 1 and 2,
- Figs. 4-6: show plane views of an embodiment of a clip for use in fixing and stretching out the intestine pack of a intestine pack by the apparatus according to the invention shown in Fig 3,
- Fig. 7: shows a side view of an embodiment of an apparatus for use by further separation of a intestine pack by secondary method steps according to the invention,
- Figs. 8-13: shows sectional views for illustrating the method and the way of working step by step, of the apparatus according to the invention shown in Fig. 7.

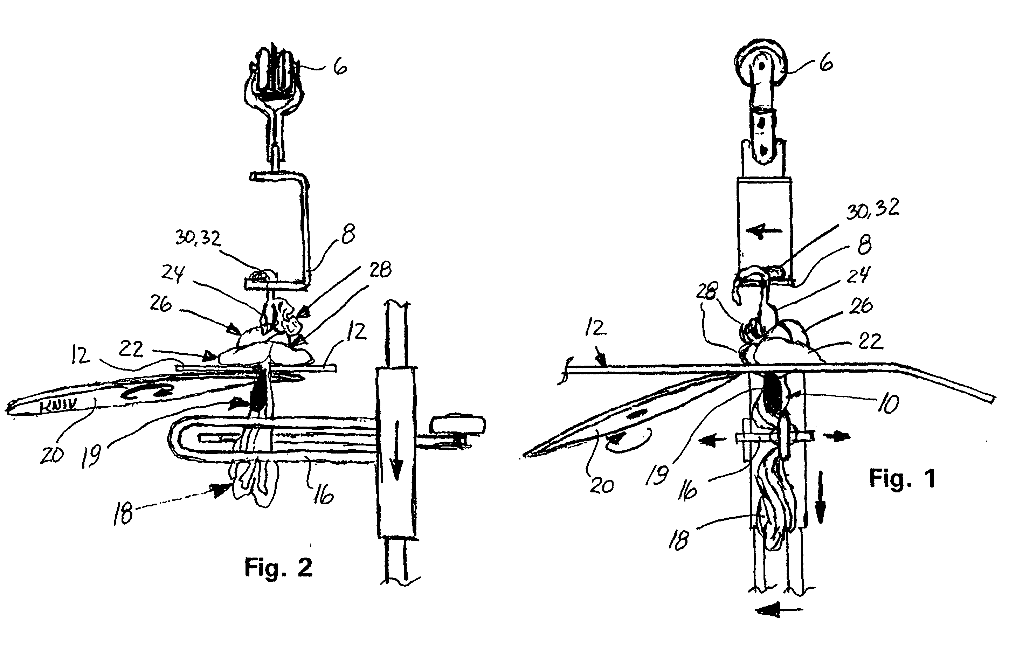

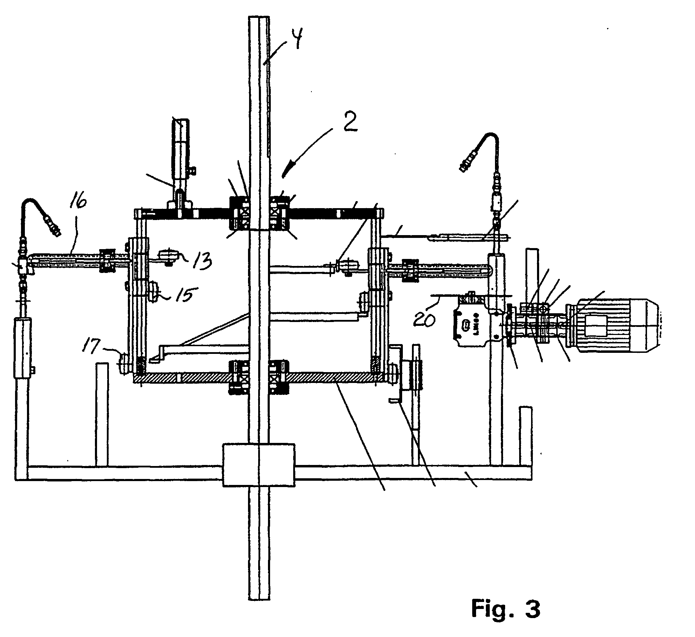

The apparatus 2 shown in Figs. 1-6 is built up in a known manner in connection with a reversing wheel 4 for an overhead conveyor 6 with special intestine clips 8 by means of which intestine packs 10 after taking out from individual broilers is inserted between mainly horizontal, curved guide rails 12 that extend with mutual short spacing along the periphery of the reversing wheel 4 and a number of identical units each comprising a clip bracket 16 arranged to catch hold of the intestine pack 18 of each intestine pack 10 and exert a downward directed pull in the intestine pack 18, as the clip brackets 16 are successively displaced downwards so that the intestine pack 18 including gall bladder 19 by passing a stationary, rotating cutter 20 in a safe way may be cut free from the liver 22 along the underside of the guide rails 12. Together with proventriculus 24, gizzard 26, heart/lungs 28, the liver 22 is located at the upper side of the guide rails 12 which is placed spaced apart from the intestine clip 8, which cf. Fig. 1 and 2 has caught hold of the gullet 30 between crop 32 and proventriculus 24.

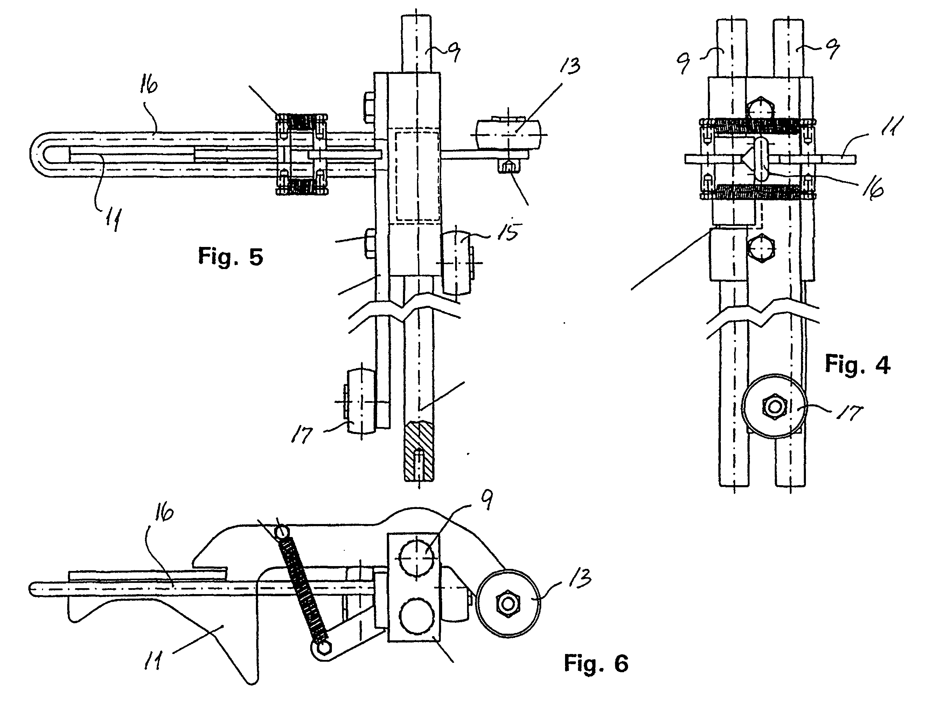

The clip bracket 16 shown in detail in Figs. 4-6 is served by guide wheels 13, 15 and 17 which in a known way interact with guide grooves and/or rails along the periphery of the reversing wheel, so that the clip bracket 11,16 is activated for opening and closing for gripping around the intestine pack 18 and displacing on vertical guides 9, respectively, for successively performing said downward directed pull in the intestine pack 18 before the passage of the rotating cutter 20 by the intestine pack 10 for cutting free intestine pack 18 and gall bladder 19 from the liver 22.

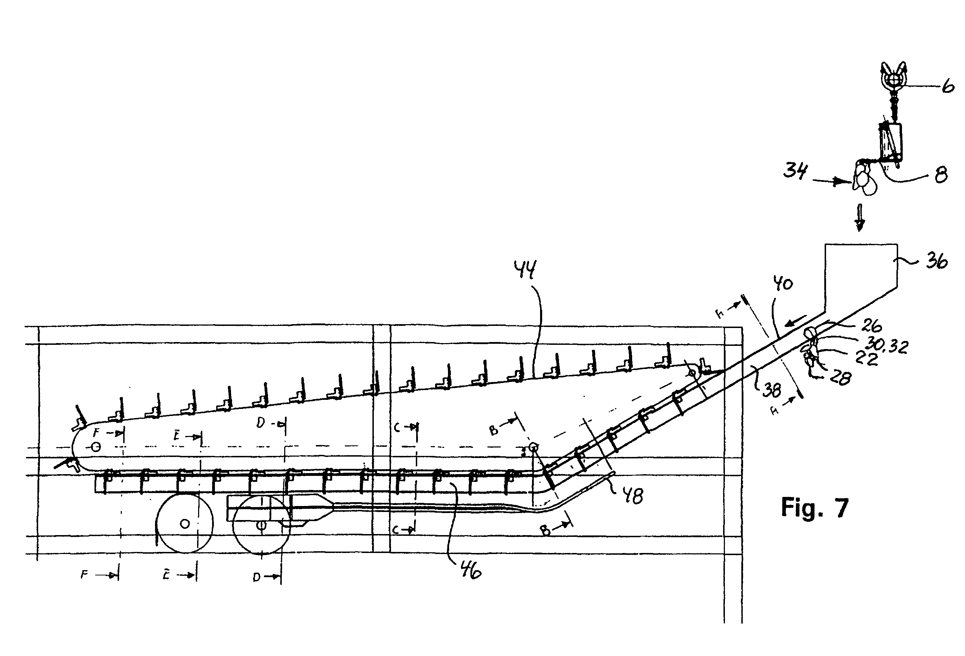

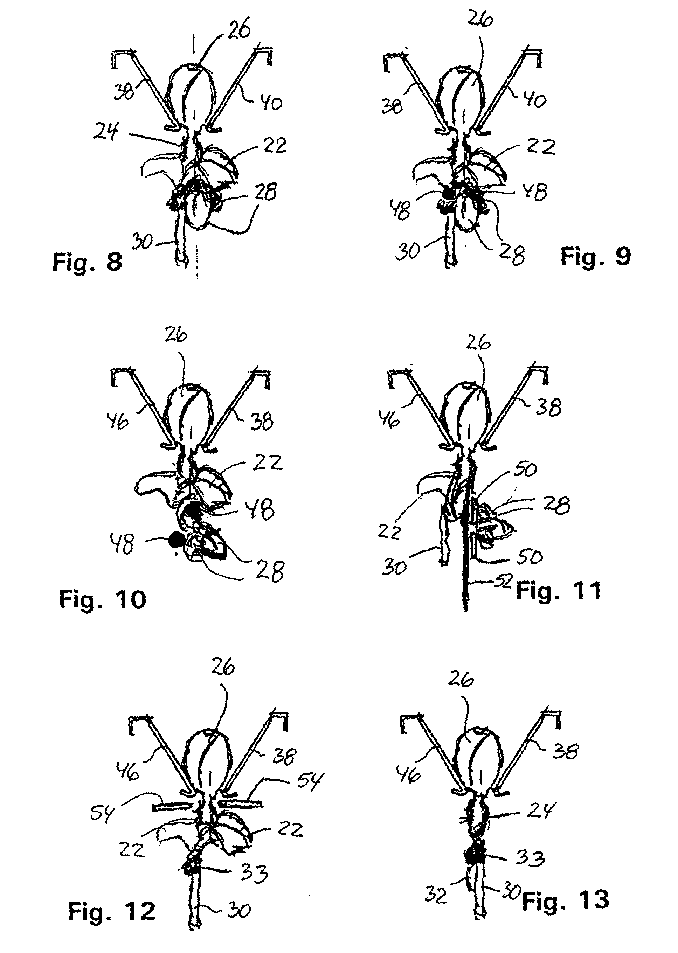

The remaining part of the intestine pack 34 is subsequently freed from the intestine pack 8 - as shown in Fig. 7 - over a funnel 36 which continues in a V-shaped guide groove 38 with a first, downward sloping stretch 40. The V-shaped guide grov 38 has a central, longitudinal slit 42. When the remaining part of the intestine pack 34 via the funnel 36 is passed down into the V-shaped guide groove 38, the intestine pack 34, except for the solid, hard gizzard 26, will pass out through the slit 42 so that the intestine pack 34 hang down from the guide groove 38 - as shown in Fig. 8 which shows a view of the situation along the line A-A in Fig. 7.

The intestine packs 34 are then advanced in the guide groove 38 with mutual spacing by means of a carrier-provided conveyor 44. Shortly before the sloping stretch 40 of the guide groove 38 continue in a horizontal stretch 46, the intestine pack 34 is inserted between mutual parallel, round guide rods 48 spaced apart from the guide groove 38 in such a way that heart/lungs 28 are situated and fixed at the underside of the guide rods 48 - as shown in Fig. 9, cf. the line B-B in Fig. 7.

The guide rods 48 are subsequently twisted successively to mutual vertical position and continued - as shown in Fig. 10, cf. the line C-C in Fig. 7 - in vertical, straight guide rails 50 along the opposite side of which a stationary rotating cutter 52 is disposed so that heart/lungs 28 are cut free from the intestine pack 34 at the passage of the rotating cutter 52 - as shown in Fig. 11, cf. the line D-D in Fig. 7.

Thereafter, the intestine pack 34 is inserted between horizontal guide rails 54 which - as shown in Fig. 2, cf. the line E-E in Fig. 7, and continuing in a downward curved part 56 so that the liver is scraped off the remaining intestine pack 34 which - as shown in Fig. 13, cf. the line F-F in Fig. 7 now consist of gizzard 24, proventriculus 24, crop 32, spleen 33 and gullet 30, and which subsequently is moved out of the guide groove 38 to further treatment, e.g. in a gizzard separating apparatus.

## Claims

1. A method for separating intestine packs from slaughtered poultry, in particular broilers, and where intestine packs (10) from individual broilers after removal from the body of the broilers with arbitrary orientation are suspended in intestine clips (8) of an overhead conveyor (6), ***characterized* in, that** lower parts of the intestine packs (18) are clamped between clip brackets (16) rotating about a reversing wheel (4), that certain organs of the intestine packs (10) with still arbitrary orientation via upwardly inclined parts of mainly horizontal guide plates (12) arranged along the periphery of a reversing wheel (4) are inserted between the guide plates (12) in such a way that said certain organs, i.e. proventriculus (24), gizzard (26), heart/lungs (28) and liver (22), are disposed over the guide plates (12), and that said lower parts of the intestine packs (18) with gall bladders (19) is disposed at the underside of the guide plates (12), so that said lower parts of the intestine packs are displaced downward in relation to said certain organs of the intestine packs (18), while said intestine packs (10) are passing a stationary, rotating knife (20) for cutting free said lower parts of the intestine pack (18) including the gall bladder (19) from the liver (22), and that the remaining intestine packs (34), i.e. proventriculus (24), gizzards (26), heart/lungs (28) and liver (22), are released and passed on to a second apparatus for further separation.

2. A method for further separation according to claim 1, ***characterized* in that** the hard solid part of the remaining intestine pack (34), the gizzard (26), is caught hold of and fixed in a guide groove (38) preferably having V-shaped cross section and being open downwards, so that the intestine pack (34) is hanging down from the guide groove (38), and that the intestine pack e.g. by means of a carrier-provided conveyor (44) is inserted between preferably mutually parallel, mainly horizontal guide rods (48) spaced apart from the guide groove (38) in such a way that heart/lungs (28) are disposed at the underside of the guide rods (48), that these are successively twisted to mutual vertical position and continue in straight, mainly vertical guide plates (50) so that heart/lungs (28) are disposed at one side of the guide plates (50), and that the heart/lungs (28) are cut free from the remaining intestine pack (34) by passing a stationary, rotating cutter (52) placed along the opposite side of the guide plates (50) after which the remaining part of the intestine pack (34) is inserted between straight, mainly horizontal guide plates (54) that are disposed immediately under the V-shaped guide groove (38), which guide plates (54) are continued in a downward curved path so that the liver (22) is scraped off from the remaining intestine pack, namely gizzard (26), proventriculus (24), spleen (33), crop (32) and gullet (30), which is then passed out of the guide groove (38) and passed further on, e.g. to a gizzard separating apparatus.

3. An apparatus for performing the method according to claim 1 and arranged in connection with a reversing wheel (4) of an overhead conveyor (6), where intestine packs (10) with arbitrary orientation are suspended from intestine clips (8) of an overhead conveyor (6), ***characterized* in that** it comprises mainly horizontal guide plates (12) arranged along the periphery of the reversing wheel (4), the guide plates (12) comprising upwardly inclined parts for successively receiving and guiding said intestine packs (10) in such a way that certain organs of the intestine packs, i.e. proventriculus (24), gizzard (26), heart/lungs (28) and liver (22) are disposed over the guide plates (12), and that the intestine pack (18) with gall bladder (19) is disposed at the underside of the guide plates (12), clip brackets (16) being arranged to rotate about the reversing wheel (4) with the same mutual distance as that of the intestine packs (4), said cliop brackets being arranged to grip and clamp lower parts of the intestine pack (18) and to exert a downward directed pull in said lower parts of the intestine pack (18), a stationary rotatable cutter (20) along the underside of the guide plates (12) for cutting free the lower part of the intestine pack (18) with gall bladder (19) from the liver (22).

4. An apparatus for performing the method according to claim 2, ***characterized* in that** it comprises a guide groove (38) which is open downwards and preferably has V-shape, which guide groove (38) is arranged to catch and fix the hard, solid part of the remaining intestine pack (34), the gizzard (26) which is advanced with mutual spacing in the guide groove (38) by means of a carrier-provided conveyor (44), preferably round, mutual parallel, mainly horizontal guide rods (48) spaced apart from the guide groove (38) for fixing the heart/lungs (28), the guide rods (48) being successively mutually twisted to a mainly vertical position and continued in straight, mainly vertical guide plates (50), a stationary rotatable cutter (52) along the opposite side of the guide plates (50) for cutting free the heart/lungs (28) from the remaining intestine pack (34), and straight, mainly horizontal guide plates (54) disposed immediately under the V-shaped guide groove (38) and continuing in a downward curved path for scraping off the liver (22) from the remaining intestine pack (34), namely gizzard (26), proventriculus (24), spleen (33), crop (32) and gullet (30), which is then released and passed further on to e.g. a gizzard separating apparatus.

## Patentansprüche

1. Verfahren zum Trennen von Eingeweidebündeln von Schlachtgeflügel, insbesondere Brathühnern, wobei Eingeweidebündel (10) von individuellen Brathühnern nach Entfernung aus dem Körper des Brathuhns in beliebiger Orientierung in Eingeweideklemmen (8) eines Überkopfförderers (6) aufgehängt werden, **dadurch gekennzeichnet, dass** untere Teile der Eingeweidebündel (18) zwischen Klemmarmen (16) festgeklemmt werden, die sich um ein Umkehrrad (4) drehen, dass bestimmte Organe der Eingeweidebündel (10) in noch beliebiger Orientierung über nach oben geneigte Teile von hauptsächlich horizontalen Führungsplatten (12), die entlang des Umfangs eines Umkehrrades (4) angeordnet sind, zwischen die Führungsplatten (12) eingeführt werden, derart, dass bestimmte Organe, d.h. Vormagen (24), Muskelmagen (26), Herz/Lungen (28) und Leber (22), über den Führungsplatten (12) angeordnet werden und dass die unteren Teile der Eingeweidebündel (18) mit Gallenblasen (19) an der Unterseite der Führungsplatten (12) angeordnet werden, so dass die unteren Teile der Eingeweidebündel in Bezug auf die bestimmten Organe der Eingeweidebündel (18) nach unten verschoben werden, während die Eingeweidebündel (10) ein stationäres Drehmesser (20) zum Freischneiden der unteren Teile der Eingeweidebündel (18) einschließlich der Gallenblase (19) von der Leber (22) passieren, und dass die übrigen Eingeweidebündel (34), d.h. Vormagen (24), Muskelmägen (26), Herz/Lungen (28) und Leber (22), freigegeben und zu einer zweiten Vorrichtung zur weiteren Trennung weitergeleitet werden.

2. Verfahren zur weiteren Trennung in Übereinstimmung mit Anspruch 1, **dadurch gekennzeichnet, dass** der harte feste Teil des übrigen Eingeweidebündels (34), der Muskelmagen (26), in einer Führungsrinne (38) ergriffen und befestigt wird, die bevorzugt einen V-förmigen Querschnitt hat und nach unten offen ist, so dass das Eingeweidebündel (34) von der Führungsrinne (38) herunterhängt, und dass das Eingeweidebündel z.B. mittels eines mit Mitnehmern versehenen Förderers (44) zwischen bevorzugt zueinander parallele, hauptsächlich horizontale Führungsstangen (48) eingeführt wird, die im Abstand von der Führungsrinne (38) angeordnet sind, derart, dass Herz/Lungen (28) an der Unterseite der Führungsstangen (48) angeordnet werden, dass diese aufeinander folgend in eine dazu senkrechte Stellung verdreht werden und in gerade, hauptsächlich vertikale Führungsplatten (50) weiterführen, so dass Herz/Lungen (28) auf einer Seite der Führungsplatten (50) angeordnet werden, und dass Herz/Lungen (28) von dem übrigen Eingeweidebündel (34) freigeschnitten werden, indem sie einen stationären Drehschneider (52) passieren, der entlang der entgegengesetzten Seite der Führungsplatten (50) angeordnet ist, wonach der übrige Teil des Eingeweidebündels (34) zwischen gerade, hauptsächlich horizontale Führungsplatten (54) eingeführt wird, die unmittelbar unter der V-förmigen Führungsrinne (38) angeordnet sind, wobei die Führungsplatten (54) in einen nach unten gekrümmten Weg weiterführen, so dass die Leber (22) von dem übrigen Eingeweidebündel abgeschabt wird, nämlich Muskelmagen (26), Vormagen (24), Milz (33), Kropf (32) und Schlund (30), welches dann aus der Führungsrinne (38) heraus befördert und z.B. zu einer Muskelmagen-Trennvorrichtung weiterbefördert wird.

3. Vorrichtung zur Durchführung des Verfahrens in Übereinstimmung mit Anspruch 1, angeordnet in Verbindung mit einem Umkehrrad (4) eines Überkopfförderers (6), wobei Eingeweidebündel (10) in beliebiger Orientierung an Eingeweideklemmen (8) eines Überkopfförderers (6) aufgehängt werden, **dadurch gekennzeichnet, dass** sie hauptsächlich horizontale Führungsplatten (12), die entlang des Umfangs des Umkehrrades (4) angeordnet sind, wobei die Führungsplatten (12) nach oben geneigte Teile zum aufeinander folgenden Aufnehmen und Führen der Eingeweidebündel (10) derart enthalten, dass bestimmte Organe der Eingeweidebündel, d.h. Vormagen (24), Muskelmagen (26), Herz/Lungen (28) und Leber (22), über den Führungsplatten (12) angeordnet werden und dass das Eingeweidebündel (18) mit Gallenblase (19) an der Unterseite der Führungsplatten (12) angeordnet wird, Klemmarme (16), die dafür eingerichtet sind, sich im gleichen Abstand voneinander wie die Eingeweidebündel (4) um das Umkehrrad (4) zu drehen, wobei die Klemmarme dafür eingerichtet sind, untere Teile des Eingeweidebündels (18) zu ergreifen und festzuklemmen und einen nach unten gerichteten Zug auf die unteren Teile des Eingeweidebündels (18) auszuüben, und einen stationären Drehschneider (20) entlang der Unterseite der Führungsplatten (12) enthält, zum Freischneiden des unteren Teils des Eingeweidebündels (18) mit Gallenblase (19) von der Leber (22).

4. Vorrichtung zur Durchführung des Verfahrens in Übereinstimmung mit Anspruch 2, **dadurch gekennzeichnet, dass** sie eine Führungsrinne (38), die nach unten offen ist und bevorzugt eine V-Form hat, wobei die Führungsrinne (38) dafür eingerichtet ist, den harten festen Teil des übrigen Eingeweidebündels (34), den Muskelmagen (26), der mittels eines mit Mitnehmern versehenen Förderers (44) mit wechselseitigem Abstand in der Führungsrinne (38) vorgerückt wird, zu ergreifen und zu befestigen, bevorzugt runde, zueinander parallele, hauptsächlich horizontale Führungsstangen (48), die im Abstand von der Führungsrinne (38) angeordnet sind, zum Befestigen der Herz/Lungen (28), wobei die Führungsstangen (48) aufeinander folgend in eine hauptsächlich vertikale Stellung verdreht und in gerade, hauptsächlich vertikale Führungsplatten (50) weitergeführt werden, einen stationären Drehschneider (52) entlang der entgegengesetzten Seite der Führungsplatten (50), zum Freischneiden von Herz/Lungen (28) von dem übrigen Eingeweidebündel (34), und gerade, hauptsächlich horizontale Führungsplatten (54) enthält, die unmittelbar unter der V-förmigen Führungsrinne (38) angeordnet sind und in einen nach unten gekrümmten Weg zum Abschaben der Leber (22) von dem übrigen Eingeweidebündel (34) weiterführen, nämlich Muskelmagen (26), Vormagen (24), Milz (33), Kropf (32) und Schlund (30), welches dann freigegeben und z.B. zu einer Muskelmagen-Trennvorrichtung weiterbefördert wird.

## Revendications

1. Procédé pour séparer les masses des viscères de volailles d'abattage, en particulier des poulets à griller, et où les masses des viscères (10) des poulets individuels, après le retrait du corps des poulets selon une orientation arbitraire, sont suspendues à des pinces de viscères (8) d'un convoyeur aérien (6), **caractérisé en ce que** les parties inférieures des masses de viscères (18) sont serrées entre des supports de pince (16) tournant autour d'une roue réversible (4), que certains organes des masses des viscères (10) avec toujours une orientation arbitraire via des parties remontant vers le haut de plaques de guidage essentiellement horizontales (12) agencées le long de la périphérie d'une roue réversible (4) sont insérés entre les plaques de guidage (12) de telle manière que certains organes précités, c'est-à-dire le proventriculus (24), le gésier (26), le coeur/poumons (28) et le foie (22) sont disposés sur les plaques de guidage (12) de telle sorte que lesdites parties inférieures des masses des viscères (18) avec les vésicules biliaires (19) sont disposées au côté inférieur des plaques de guidage (12) de telle sorte que lesdites parties inférieures des masses de viscères sont déplacées vers le bas relativement à certains organes des masses des viscères (18), pendant que lesdites masses de viscères (10) passent un couteau tournant stationnaire (20) pour découper lesdites parties inférieures des masses des viscères (18) y compris la vésicule biliaire (19) du foie (22), et **en ce que** les masses des viscères restantes (34), c'est-à-dire le proventriculus (24), le gésier (26), le coeur/poumons (28) et le foie (22) sont relâchés et sont amenés à passer sur un second appareil en vue d'une séparation ultérieure.

2. Procédé pour une séparation ultérieure selon la revendication 1, **caractérisé en ce que** la partie solide dure des masses de viscères restantes (34), le gésier (26), est saisie et fixée dans une rainure de guidage (38) de préférence d'une section transversale en forme de V et ouverte vers le bas de telle sorte que les masses de viscères (34) pendent de la rainure de guidage (38), et **en ce que** les masses de viscères, par exemple au moyen d'un convoyeur pourvu de porteurs (44), sont insérées entre des tiges de guidage (48) de préférence mutuellement parallèles, essentiellement horizontales, espacées de la rainure de guidage (38) de façon que le coeur/poumons (28) soient disposés au côté inférieur des tiges de guidage (48), que celles-ci sont successivement tordues à une position mutuelle verticale et continuent dans des plaques de guidage rectilignes, sensiblement verticales (50) de telle sorte que le coeur/poumons (28) sont disposés sur -un côté des plaques de guidage (50), et **en ce que** le coeur/les poumons (28) sont découpés des masses de viscères restantes (34) en faisant passer un organe de coupe tournant stationnaire (52) placé le long du côté opposé des plaques de guidage (50), après quoi la partie restante des masses de viscères (34) est insérée entre les plaques de guidage rectilignes, sensiblement horizontales (54) qui sont disposées directement sous la rainure de guidage en forme de V (38), lesdites plaques de guidage (54) continuant selon un trajet courbé vers le bas de telle sorte que le foie (22) est raclé des masses de viscères restantes, à savoir du gésier (26), du proventriculus (24), de la rate (33), du jabot (32) et du gosier (30), qui sont ensuite amenés à passer hors de la rainure de guidage (38) et à passer plus loin, par exemple sur un appareil de séparation de gésier.

3. Appareil pour exécuter le procédé selon la revendication 1 et agencé en rapport avec une roue réversible (4) d'un convoyeur aérien (6), où des masses de viscères (10) d'une orientation arbitraire sont suspendues à des pinces de viscères (8) d'un convoyeur aérien (6), **caractérisé en ce qu'**il comprend des plaques de guidage (12) sensiblement horizontales agencées le long de la périphérie de la roue réversible (4), les plaques de guidage (12) comprenant des parties remontant vers le haut pour recevoir et guider successivement lesdites masses de viscères (10) de telle manière que certains organes des masses de viscères, c'est-à-dire le proventriculus (24), le gésier (26), le coeur/poumons (28) et le foie (22) sont disposés sur les plaques de guidage (12), et **en ce que** la masse de viscères (18) avec la vésicule biliaire (19) est disposée au côté inférieure des plaques de guidage (12), des supports de pince (16) étant agencés pour tourner autour de la roue réversible (4) à la même distance mutuelle que celle des masses de viscères (4), lesdits supports de pince étant agencés pour saisir et serrer des parties inférieures des masses de viscères (18) et pour exercer une traction dirigée vers le bas dans lesdites parties inférieures des masses de viscères (18), un organe de coupe tournant stationnaire (20) le long du côté inférieur des plaques de guidage (12) pour découper la partie inférieure des masses de viscères (18) avec la vésicule biliaire (19) du foie (22).

4. Appareil pour exécuter le procédé selon la revendication 2, **caractérisé en ce qu'**il comprend une rainure de guidage (38) qui est ouverte vers le bas et qui a de préférence une forme en V, cette rainure de guidage (38) étant agencée pour saisir et fixer la partie solide et dure de masses de viscères restantes (34), le gésier (26) qui est avancé avec un espacement mutuel dans la rainure de guidage (38) au moyen d'un convoyeur (44) pourvu de porteurs, de préférence de tiges de guidage rondes, mutuellement parallèles, essentiellement horizontales (48) espacées de la rainure de guidage (38) pour fixer le coeur/poumons (28), les tiges de guidage (38) étant successivement tordues mutuellement à une position essentiellement verticale et continuent par des plaques de guidage rectilignes, essentiellement verticales (50), un organe de coupe stationnaire tournant (52) le long du côté opposé des plaques de guidage (50) pour découper le coeur/poumons (28) des massés de viscères restantes (34), et des plaques de guidage rectilignes, essentiellement horizontales (54) disposées directement sous la rainure de guidage en forme de V (38) et continuant selon un chemin courbé vers le bas pour racler le foie (22) des masses de viscères restantes (34), à savoir le gésier (26), le proventriculus (24), la rate (33), le jabot (32) et le gosier (30), qui sont ensuite relâchés et amenés à passer plus loin, par exemple sur un appareil de séparation de gésier.
